# EUROPEAN PATENT APPLICATION

(11) **EP 2 056 197 A1**
(43) Date of publication of application: **06.05.2009**
(21) Application number: 08168001.9
(22) Date of filing: 31.10.2008
(51) Int. Cl.: G06F 9/48, H04N 1/32, G06F 9/50

(54) **Image forming device, image formation controlling method, and image formation controlling program**

(30) Priority: 02.11.2007 JP 2007286730; 23.10.2008 JP 2008273455
(71) Applicant: Ricoh Company, Ltd., Tokyo 143-8555 (JP)
(72) Inventor: Ishikawa, Masaaki, Tokyo (JP); Nakamura, Satoshi, Kanagawa (JP)
(74) Representative: Schwabe - Sandmair - Marx

(57) **Abstract**

An image forming device includes a plurality of input units, a plurality of processing units, and a plurality of output units which are arranged to perform image-data processing. The image forming device includes a processing operation executing unit configured to instruct a processing operation of each of a predetermined input unit, a predetermined processing unit, and a predetermined output unit. A controlled unit reporting unit is configured in the processing operation executing unit to notify a controlled unit of processing to be performed, to each of the predetermined input unit, the predetermined processing unit, and the predetermined output unit.

## Description

### BACKGROUND OF THE INVENTION

### 1. Field of the Invention

This invention relates to an image forming device including a plurality of input units, a plurality of processing units, and a plurality of output units which are arranged to form an image.

### 2. Description of the Related Art

In recent years, an image forming device, such as a printer, a copier, a,scanner, a facsimile, or a multi-function peripheral, is arranged to have a CPU (central processing unit) as in a general-purpose computer, so that one of a plurality of image forming functions is performed in accordance with the control of an application program (hereinafter, called application), although the available storage capacity of the image forming device is limited.

For example, Japanese Patent No. 3679349 discloses an image forming device which is provided as a platform with the functions used in common by a set of applications, so that an application can be implemented by using an API (application programming interface) of the platform.

In the above-described image forming device, the commonly used functions may be implemented as the platform. Thus, it is possible to avoid implementing duplicate functions for the respective applications, and the efficiency of development of each application can be increased.

However, in the image forming device according to the related art, each application is constructed by combining two or more of the devices having fixed functions, and the processing operation which can be performed by the image forming device in accordance with the control of the application is also fixed.

### SUMMARY OF THE INVENTION

In one aspect of the invention, the present disclosure provides an improved image forming device in which the above-described problems are eliminated.

In one aspect of the invention, the present disclosure provides an image forming device which is capable of changing the processing operation of an application flexibly in accordance with the attribute of image data to be processed.

In an embodiment of the invention which solves or reduces one or more of the above-mentioned problems, the present disclosure provides an image forming device including a plurality of input units, a plurality of processing units, and a plurality of output units, which are arranged to perform image-data processing, wherein, with respect to a single application in the image forming device, a predetermined input unit, a predetermined processing unit, and a predetermined output unit are selected from among the plurality of input units, the plurality of processing units, and the plurality of output units, respectively, and the predetermined input unit, the predetermined processing unit, and the predetermined output unit are connected to execute the application, the image forming device comprising: a processing operation executing unit configured to instruct a processing operation of each of the predetermined input unit, the predetermined processing unit, and the predetermined output unit; and a controlled unit reporting unit configured in the processing operation executing unit to notify a controlled unit of processing to be performed, to each of the predetermined input unit, the predetermined processing unit, and the predetermined output unit.

In an embodiment of the invention which solves or reduces one or more of the above-mentioned problems, the present disclosure provides an image formation controlling method for use in an image forming device including a plurality of input units, a plurality of processing units, and a plurality of output units, which are arranged to perform image-data processing, wherein, with respect to a single application in the image forming device, a predetermined input unit, a predetermined processing unit, and a predetermined output unit are selected from among the plurality of input units, the plurality of processing units, and the plurality of output units, respectively, and the predetermined input unit, the predetermined processing unit, and the predetermined output unit are connected to execute the application, the image formation controlling method comprising: a processing operation executing step of instructing a processing operation of each of the predetermined input unit, the predetermined processing unit, and the predetermined output unit; and a controlled unit reporting step of notifying a controlled unit of processing to be performed, to each of the predetermined input unit, the predetermined processing unit, and the predetermined output unit.

According to the embodiments of the invention, it is possible to provide an image forming device which is capable of changing the processing operation of an application flexibly in accordance with the attribute of image data to be processed.

Other objects, features and advantages of the present invention will become more apparent from the following detailed description when read in conjunction with the accompanying drawings.

### BRIEF DESCRIPTION OF THE DRAWINGS

FIG. 1 is a diagram for explaining the concept of a pipe and filter architecture.
FIG. 2 is a block diagram showing the components of a filter.
FIG. 3 is a diagram showing examples of an input filter, a processing filter, and an output filter in a multi-function peripheral of an embodiment of the invention.
FIG. 4 is a diagram showing examples of the combination of filters for performing one of functions of the multi-function peripheral of the present embodiment.
FIG. 5 is a block diagram showing the composition of an image forming device of an embodiment of the invention.
FIG. 6 is a diagram showing examples of a filter control table when the copying of image data is performed by the multi-function peripheral of the present embodiment.
FIG. 7 is a sequence diagram for explaining the algorithm which notifies, to a processing operation executing unit, information indicating connecting relation of predetermined filters from a connecting relation storage unit.
FIG. 8 is a block diagram showing the hardware composition of a multi-function peripheral of an embodiment of the invention.
FIG. 9 is a flowchart for explaining the processing operation performed by the connecting relation storage unit and the processing operation executing unit.
FIG. 10 is a flowchart for explaining the processing operation performed by the image forming device of the present embodiment.

### DETAILED DESCRIPTION OF THE PREFERRED EMBODIMENTS

A description will be given of embodiments of the invention with reference to the accompanying drawings.

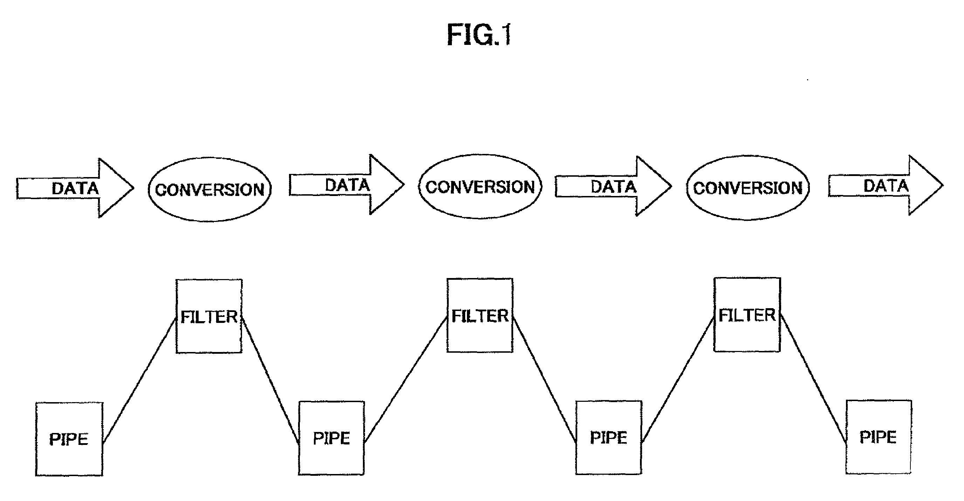

The concept of a pipe and filter architecture adopted in the software architecture of a multi-function peripheral which is an embodiment of the image processing device of the invention will be described. FIG. 1 is a diagram for explaining the concept of the pipe and filter architecture.

As shown in FIG. 1, filters are connected by pipes respectively. Each filter receives input image data, converts the input image data, and outputs the resulting image data. Each pipe transfers the image data output from a filter to the following filter.

Each of the functions arranged in the multi-function peripheral of the present embodiment may be regarded as a series of conversions of document data (image data). Each function of the multi-function peripheral may be generalized into inputting of document data, processing of the input document data, and outputting of the processed document data. If the inputting, the processing, and the outputting are regarded as conversions, a software component which carries out one conversion may constitute a filter.

Specifically, a filter which carries out the inputting of document data is called input filter, a filter which carries out the processing of the input document data is called processing filter, and a filter which carries out the outputting of the processed document data is called output filter.

These filters are independent of each other, and, fundamentally, there is no dependent relationship between the filters (or there is no calling or called relationship between the filters. Therefore, the addition (installation) or deletion (uninstallation) of filters per filter in the software of the multi-function peripheral of the present embodiment may be carried out.

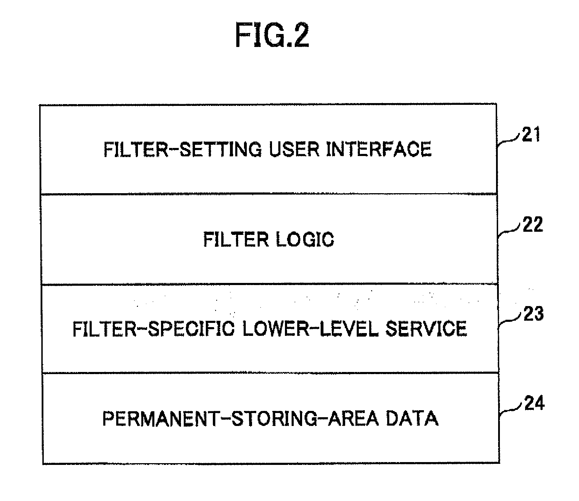

Next, the components of a filter will be described. FIG. 2 is a block diagram showing the components of a filter.

As shown in FIG. 2, the filter includes a filter-setting user interface (UI) 21, a filter logic 22, a filter-specific lower-level service 23, and a permanent-storage-area data 24.

The filter-setting user interface 21 is a program which is configured to display a screen for requesting the user to set up the execution conditions of a filter, on an operation panel of the multi-function peripheral. For example, in a case of a reading filter which is one of input filters, a screen for requesting the user to set up the resolution, the concentration, and the image classification of the reading filter is displayed on the operation panel by the filter-setting user interface 21.

In a case where displaying a screen on the operation panel is performed based on HTML (HyperText Markup Language) data or scripts, the filter-setting user interface may be implemented in a form of HTML data or scripts.

The filter logic 22 is a program in which the logic for performing the functions of the filter is implemented. For example, in a case of a reading filter, the filter logic 22 is a program in which the logic for performing control of the document reading by the scanner is implemented.

The filter-specific lower-level service 23 is a lower-level function (library) needed for performing the filter logic 22. For example, in a case of a reading filter, the filter-specific lower-level service 23 is a lower-level function for controlling the scanner.

The permanent-storage-area data 24 corresponds to the schema definition of the data which needed for being stored in the non-volatile memory of the multi-function peripheral. The permanent-storage-area data 24 is, for example, the setting information of the filter (which may include the defaults of the execution conditions).

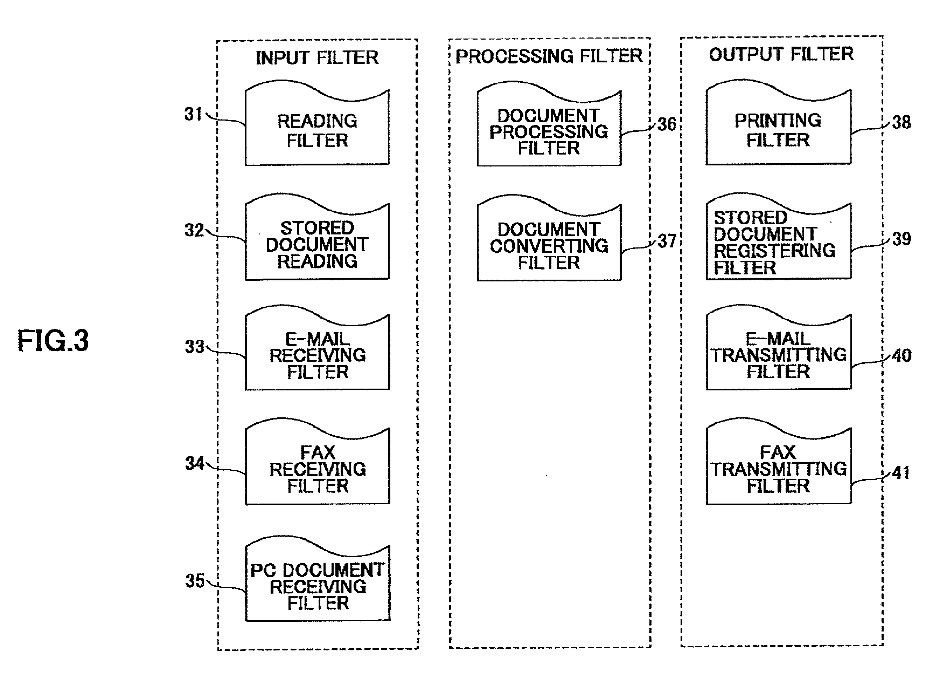

FIG. 3 is a diagram showing examples of the input filter, the processing filter, and the output filter of the multi-function peripheral of this embodiment.

As shown in FIG. 3, the input filter includes a reading filter 31, a stored document reading filter 32, an e-mail receiving filter 33, a FAX receiving filter 34, and a PC document receiving filter 35.

The reading filter 31 controls the reading of image data by the scanner and outputs the read image data. The stored document reading filter 32 reads out a document data (image data) stored in the storage unit of the multi-function peripheral and outputs the read document data. The e-mail receiving filter 33 receives an e-mail via the network (not shown) and outputs the data contained in the e-mail. The FAX receiving filter 34 controls the FAX receiving function of the multi-function peripheral and outputs the received image data. The PC document receiving filter 35 receives a print data from a client personal computer (not shown) via the network and outputs the received print data.

The processing filter includes a document processing filter 36 and a document converting filter 37. The document processing filter 36 performs a predetermined image conversion process (integration, expansion, or reduction) for the input image data and outputs the resulting image data. The document converting filter 37 performs a rendering process. For example, the document converting filter 37 converts the input PostScript data into a bit map data and outputs the bit map data.

The output filter includes a printing filter 38, a stored document registering filter 39, an e-mail transmitting filter 40, and a FAX transmitting filter 41. The printing filter 38 causes the plotter of the multi-function peripheral to output the input image data (printing). The stored document registering filter 39 stores the input image data in the hard disk of the multi-function peripheral. The e-mail transmitting filter 40 attaches the input image data to an e-mail and transmits the e-mail. The FAX transmitting filter 41 causes the FAX transmitting function of the multi-function peripheral to transmit a FAX of the input image data.

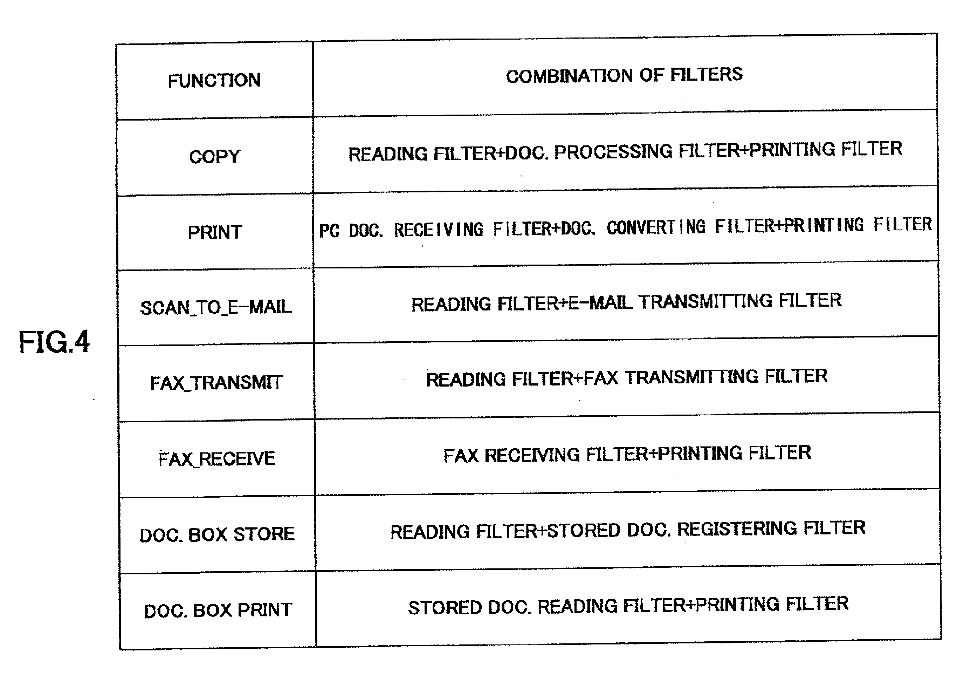

FIG. 4 is a diagram showing examples of the combination of the filters for performing each of the functions (applications) in the multi-function peripheral of this embodiment.

For example, the copy function is performed by connecting the reading filter 31 and the printing filter 38. In this case, an image data is read from a document by the reading filter 31, and the image data read by the reading filter 31 is printed by the printing filter 38.

When execution of a process accompanied with the copy function, such as integration, expansion, reduction, etc., is requested, the document processing filter 36 which carries out the process is inserted between the reading filter 31 and the printing filter 38.

The print function (the function to print a document data from a client PC) is performed by connecting the PC document receiving filter 35, the document converting filter 37, and the printing filter 38.

The scan_to_e-mail function (the function to transmit the scanned image data by e-mail) is performed by connecting the reading filter 31 and the mail transmitting filter 40.

The FAX transmitting function is performed by connecting the reading filter 31 and the FAX transmitting filter 34.

The FAX receiving function is performed by connecting the FAX receiving filter 34 and the printing filter 38.

The document box storing function (the function to store the scanned image data in the multi-function peripheral) is performed by connecting the reading filter 31 and the stored document registering filter 39.

The document box printing function (the function to print the document data stored in the multi-function peripheral) is performed by connecting the stored document reading filter 32 and the printing filter 38.

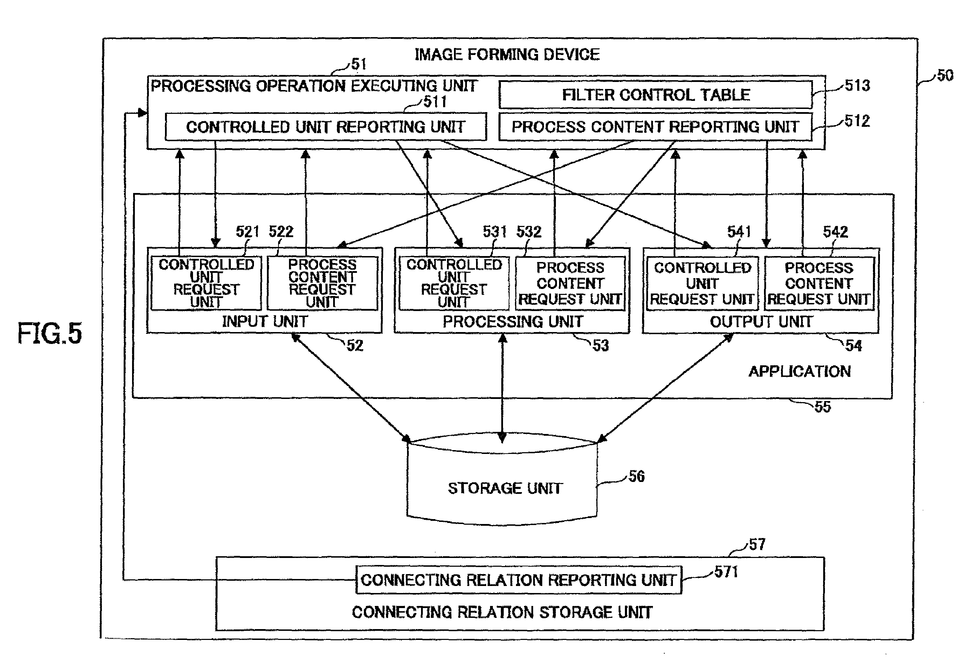

FIG. 5 is a block diagram showing the composition of an image forming device 50 of an embodiment of the invention.

As shown in FIG. 5, the image forming device 50 of this embodiment includes a processing operation executing unit 51, an application unit 55, a storage unit 56, and a connecting relation storage unit 57.

The processing operation executing unit 51 has the function to instruct the processing operation to each of the relevant units in the image forming device, in accordance with a policy table. This policy table means a table which specifies the processing operation to be performed by each processing unit in accordance with the control code.

The control code is embedded in the document beforehand, and, when the document is scanned and image data is read from the document, the control code concerned is concurrently acquired as one of the control information needed to specify the processing operation of each unit.

As shown in FIG. 5, the processing operation executing unit 51 includes a controlled unit reporting unit 511, a process content reporting unit 512, and a filter control table 513.

The controlled unit reporting unit 511 responds to one of the respective controlled unit request units 521, 531, and 541 of the input unit 52, the processing unit 53, and the output unit 54, and notifies the controlled unit of image processing which is to be performed by each of the processing units. For example, in response to a request from the input unit 52, the controlled unit reporting unit 511 notifies to the input unit 52 the controlled unit of image processing which is to be performed both on a page basis and on a document basis. Also, in response to a request from the processing unit 53, the controlled unit reporting unit 511 notifies to the processing unit 53 the controlled unit of image processing which is to be performed on a page basis only.

Alternatively, in an embodiment of the processing operation executing unit 51, the controlled unit reporting unit 511 may be arranged to notify the controlled unit of image processing which is to be performed by each of the processing units, even when any request is not received from one of the controlled unit request units 521, 531, and 541 of the input unit 52, the processing unit 53, and the output unit 54.

The process content reporting unit 512 responds to one of the respective process content request units 522, 532, and 542 of the input unit 52, the processing unit 53, and the output unit 54, and notifies the process content of image processing which indicate what process is to be performed by each of the relevant units. For example, in response to a request from the input unit 52, the process content reporting unit 512 notifies to the input unit 52 that a job log is to be stored on a document basis. Also, in response to a request from the output unit 54, the process content reporting unit 512 notifies to the output unit 54 that printing is canceled on a page basis.

Alternatively, in an embodiment of the processing operation executing unit 51, the process content reporting unit 512 may be arranged to notify the process content of the image processing which indicate what process is to be performed by each of the relevant units, even when any request is not received from one of the process content request units 522, 532, and 542 of the input unit 52, the processing unit 53, and the output unit 54.

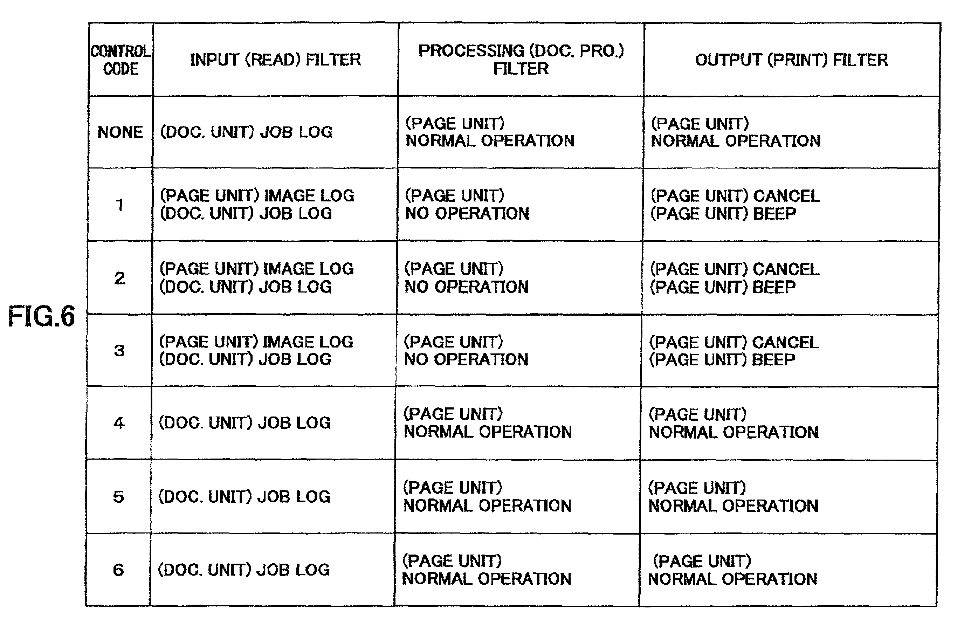

In the image forming device 50 of FIG. 5, the filter control table 513 is a table which specifies the processing operation which is to be performed by each relevant filter in accordance with the control code. FIG. 6 shows an example of the filter control table 513.

Specifically, in the example shown in FIG. 6, the filter control table 513 specifies the processing operation which is to be performed by the input filter, the processing filter, and the output filter in accordance with the control code, when the copy function is performed by the multi-function peripheral. As shown in FIG. 6, with respect to the input filter, the processing operation to be performed on a page basis and the processing operation to be performed on a document basis are separately specified by some of the values indicated by the control codes.

In the image forming device 50 of FIG. 5, the storage unit 56 performs the process equivalent to the pipe in the above-mentioned pipe and filter architecture. Specifically, the storage unit 56 is a storage device in which the processing result of each of the input unit 52, the processing unit 53, and the output unit 54 is temporarily stored.

In this embodiment, the input unit 52, the processing unit 53, and the output unit 54 are arranged to cause the storage unit 56 to store the control code as bibliographic information, together with the processing result of each unit.

The application unit 55 includes an input unit 52, a processing unit 53, and an output unit 54. The input unit 52 performs the process equivalent to the input filter in the above-mentioned pipe and filter architecture. Specifically, the input unit 52 performs any of the image-data reading process using the scanner, the e-mail receiving process, the FAX receiving process, etc.

The input unit 52 includes a controlled unit request unit 521 and a process content request unit 522. The controlled unit request unit 521 inquires the controlled unit of processing (which indicates whether the processing operation by the input unit 52 is to be performed on a document basis or on a page basis) to the processing operation executing unit 51. In accordance with the controlled unit notified by the controlled unit reporting unit 511 of the processing operation executing unit 51, the input unit 52 performs the processing operation.

In response to the controlled unit previously notified by the controlled unit reporting unit 511, the process content request unit 522 requests the processing operation executing unit 51 to send the content of the processing to be performed by the input unit 52. Specifically, the process content request unit 522 requests the processing operation executing unit 51 to send the content of the processing which corresponds to the control code read from the storage unit 56, to the process content request unit 522. Thus, the input unit 52 performs the processing which is to be performed by the input unit 52 in accordance with the control code, for which the content of the processing is notified by the process content reporting unit 512 of the processing operation executing unit 51.

The processing unit 53 performs the process equivalent to the processing filter in the above-mentioned pipe and filter architecture. Specifically, the processing unit 53 performs a predetermined image processing (integration, expansion, reduction, etc.) and a rendering processing for the input image data.

The processing unit 53 includes a controlled unit request unit 531 and a process content request unit 532. The controlled unit request unit 531 inquires the controlled unit of processing (which indicates whether the processing operation by the processing unit 53 is to be performed on a document basis or on a page basis) to the processing operation executing unit 51. In accordance with the controlled unit notified by the controlled unit reporting unit 511 of the processing operation executing unit 51, the processing unit 53 performs the processing operation.

In response to the controlled unit previously notified by the controlled unit reporting unit 531, the process content request unit 532 requests the processing operation executing unit 51 to send the content of the processing to be performed by the processing unit 53. Specifically, the process content request unit 532 requests the processing operation executing unit 51 to send the content of the processing which corresponds to the control code read from the storage unit 56, to the process content request unit 532. Thus, the processing unit 53 performs the processing which is to performed by the processing unit 53 in accordance with the control code, for which the content of the processing is notified by the process content reporting unit 512 of the processing operation executing unit 51.

The output unit 54 performs the process equivalent to the output filter in the above-mentioned pipe and filter architecture. Specifically, the output unit 54 performs any of the printing job, the e-mail transmitting process, the FAX transmitting process, etc.

The output unit 54 includes a controlled unit request unit 541 and a process content request unit 542. The controlled unit request unit 541 inquires the controlled unit of processing (which indicates whether the processing operation by the output unit 54 is to be performed on a document basis or on a page basis) to the processing operation executing unit 51. In accordance with the controlled unit notified by the controlled unit reporting unit 511 of the processing operation executing unit 51, the output unit 54 performs the processing operation.

In response to the controlled unit previously notified by the controlled unit reporting unit 541, the process content request unit 542 requests the processing operation executing unit 51 to send the content of the processing to be performed by the output unit 54. Specifically, the process content request unit 542 requests the processing operation executing unit 51 to send the content of the processing which corresponds to the control code read from the storage unit 56, to the process content request unit 542. Thus, the output unit 54 performs the processing which is to be performed by the output unit 54 in accordance with the control code, for which the content of the processing is notified by the process content reporting unit 512 of the processing operation executing unit 51.

Alternatively, when the controlled unit reporting unit 511 and the process content reporting unit 512 are arranged to notify the controlled unit of image processing to be performed by each unit and the content of the image processing even if they do not receive any request from one of the input unit 52, the processing unit 53 and the output unit 54, the input unit 52, the processing unit 53 and the output unit 54 may be arranged such that they do not include the controlled unit request units 521, 531 and 541 or the process content request units 522, 532 and 542.

In the image forming device 50 of FIG. 5, the connecting relation storage unit 57 is the software component which performs one function (a single application in the image forming device 50) by the combination of a predetermined input unit 52 chosen from a plurality of input units 52, a predetermined processing unit 53 chosen from a plurality of processing units 53, and a predetermined output unit 54 chosen from a plurality of output units 54, which filters are defined fixedly beforehand (the definition of the filters corresponding to the application is optionally given by the user's operation).

A connecting relation reporting unit 571 is arranged in the connecting relation storage unit 57 to notify the information indicating the above-mentioned combination, which is stored beforehand in the connecting relation storage unit 57, to the processing operation executing unit 51. Thereby, the processing operation executing unit 51 is able to acquire the information indicating the combination of the predetermined input unit 52, the predetermined processing unit 53, and the predetermined output unit 54, which information is stored in the connecting relation storage unit 57.'

Next, the algorithm which notifies the information read from the connecting relation storage unit 57, to the processing operation executing unit 51 by using the connecting relation reporting unit 571 will be described.

The connecting relation storage unit 57 notifies the connecting relation of two filters to the processing operation executing unit 51 continuously in a repeated manner, and, thereby, the processing operation executing unit 51 will acquire the information indicating the connecting relation of the predetermined input filter, the predetermined processing filter and the predetermined output filter which correspond to a single application.

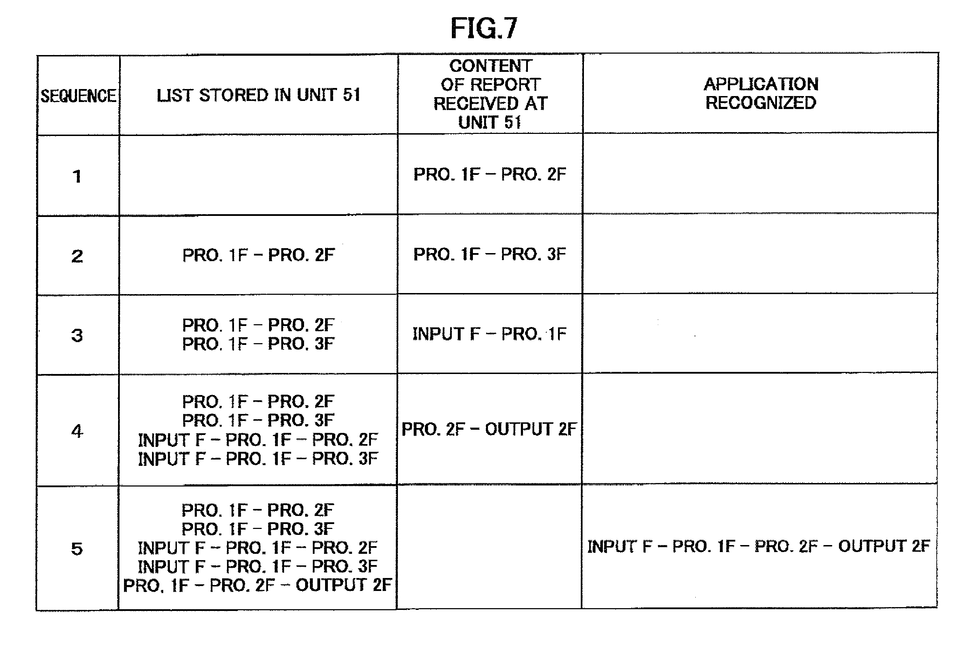

Next, FIG. 7 is a sequence diagram for explaining the algorithm which notifies, to the processing operation executing unit 51, the information indicating a combination of a predetermined input unit 52, a predetermined processing unit 53, and a predetermined output unit 54, which information is read from the connecting relation storage unit 57.

As shown in FIG. 7, in sequence 1, the information indicating that "processing 1 filter and processing 2 filter" are connected, which information is read from the connecting relation storage unit 57, is notified to the processing operation executing unit 51.

Next, in sequence 2, the information notified in sequence 1 is stored as a list in the processing operation executing unit 51, and the information indicating that "processing 1 filter and processing 3 filter" are connected which information is read from the connecting relation storage unit 57 is notified.

In sequence 3, the information notified in sequence 2 is further stored as a list in the processing operation executing unit 51, and the information indicating that "input filter and processing 1 filter" are connected which information is read from the connecting relation storage unit 57 is newly notified.

In sequence 4, the information indicating the connecting relation newly notified in sequence 3 is combined with both the information indicating the connecting relation of "processing 1 filter and processing 2 filter" and the information indicating the connecting relation of "processing 1 filter and processing 3 filter" which have already been stored in the processing operation executing unit 51. Then, the information indicating the connecting relation of "input filter, processing 1 filter, and processing 2 filter" and the information indicating the connecting relation of "input filter, processing 1 filter, and processing 3 filter" are newly stored as a list in the processing operation executing unit 51.

Moreover, in sequence 4, the information indicating the connecting relation of "processing 2 filter and output 2 filter" which information is read from the connecting relation storage unit 57 is newly notified to the processing operation executing unit 51.

Next, in sequence 5, the information indicating the connecting relation of "processing 2 filter and output 2 filter" newly notified in sequence 4 is connected with the information indicating the connecting relation of "input filter, processing 1 filter, and processing 2 filter" which has already been stored in the processing operation executing unit 51. Then, the processing operation executing unit 51 acquires information indicating the connecting relation of "input filter, processing 1 filter, processing 2 filter, and output 2 filter", and the information indicating this connecting relation is directed to the combination of the series of predetermined filters including all of the input filter, the processing filter, and the output filter.

In accordance with the algorithm as shown in FIG. 7, the information indicating the connecting relation directed to the combination of the series of predetermined filters which are contained in the connecting relation storage unit 57 is notified to the processing operation executing unit 51, and the processing operation executing unit 51 recognizes that information. Thus, the processing operation executing unit 51 is able to instruct the processing operations of the predetermined filters which constitute each of the plurality of applications in the image forming device.

Next, the composition of a multi-function peripheral which is an image forming device of an embodiment of the invention will be described.

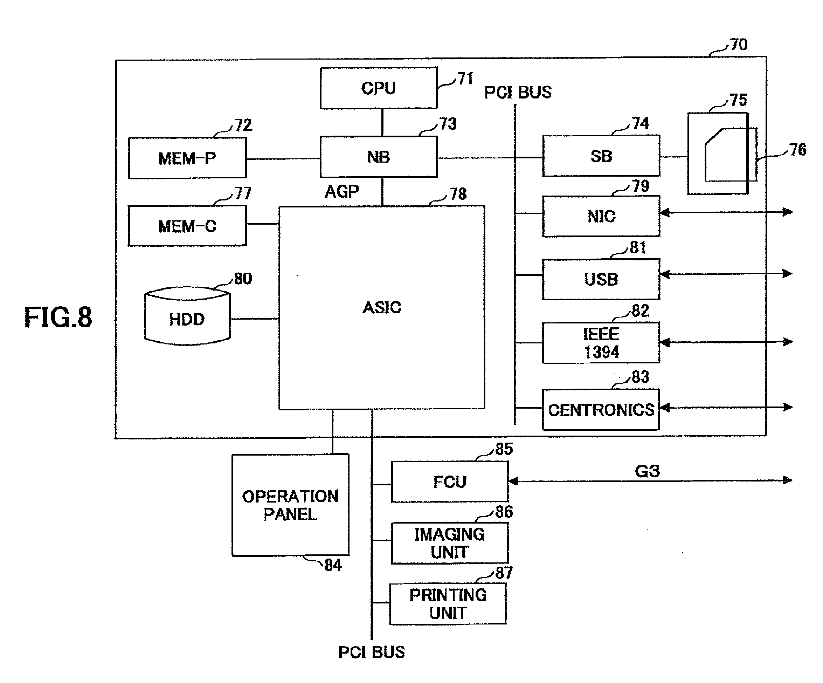

FIG. 8 is a block diagram showing the hardware composition of a multi-function peripheral of an embodiment of the invention.

As shown in FIG. 8, the hardware of the multi-function peripheral of this embodiment includes a controller 70, an operation panel 84, a facsimile control unit (FCU) 85, an imaging unit (scanner) 86, and a printing unit (plotter) 87.

The controller 70 includes a CPU (central processing unit) 71, an ASIC (application-specific integrated circuit) 78, an NB (north bridge) 73, an SB (south bridge) 74, an MEM-P 72, an MEM-C 77, an HDD (hard disk drive) 80, a memory card slot 75, an NIC (network interface controller) 79, a USB (universal serial bus) device 81, an IEEE (the Institute of Electrical and Electronics Engineers) 1394 device 82, and a Centronics device 83.

The CPU 71 is an IC (integrated circuit) designed for performing various kinds of information processing. The ASIC 78 is an IC designed for performing various kinds of image processing. The NB 73 is the north bridge of the controller 70. The SB 74 is the south bridge of the controller 70. The MEM-P 72 is the system memory of the multi-function peripheral. The MEM-C 77 is the local memory of the multi-function peripheral. The HDD 80 is the storage of the multi-function peripheral. The memory card slot 75 is the slot for setting the memory card 76. The NIC 79 is a controller for performing network communications in accordance with a MAC (media access control) address. The USB device 81 is a device for detecting connection of a device conforming to the USB specifications. The Centronics device 83 is a device for detecting connection of a device conforming to the Centronics specification.

The operation panel 84 is the hardware (an operation unit) for enabling an operator to input instructions to the multi-function peripheral, as well as the hardware (a display unit) for enabling an operator to receive messages output from the multi-function peripheral.

For example, the software of the multi-function peripheral in an embodiment of the invention is stored in the MEM-C 77, and, when executed by the CPU 71, the software from the MEM-C 77 is loaded to the MEM-P 72 and execution of the software causes the CPU 71 to perform any of the functions of the multi-function peripheral.

Next, the processing operation performed by the multi-function peripheral of this embodiment will be described with reference to FIG. 6, FIG. 9, and FIG. 10.

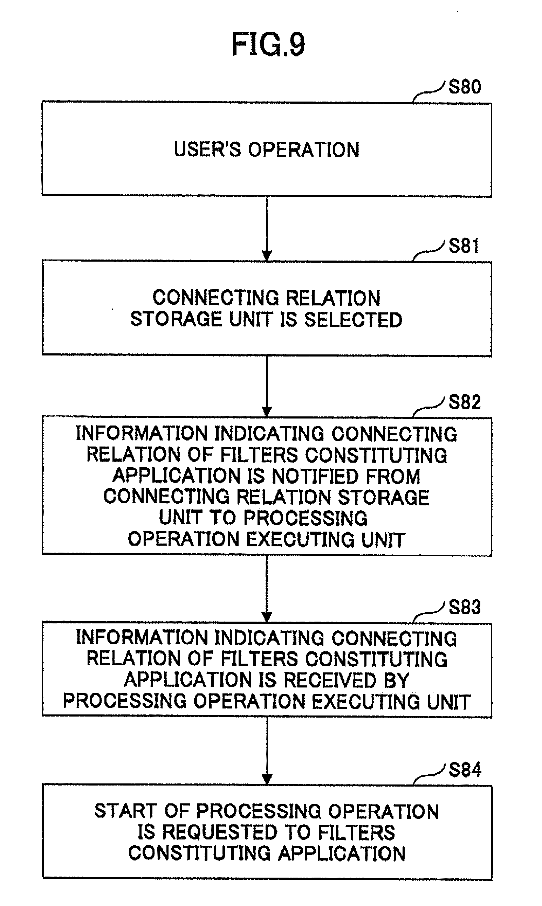

FIG. 9 is a flowchart for explaining the processing operation performed by the connecting relation storage unit 57 and the processing operation executing unit 51 in this embodiment.

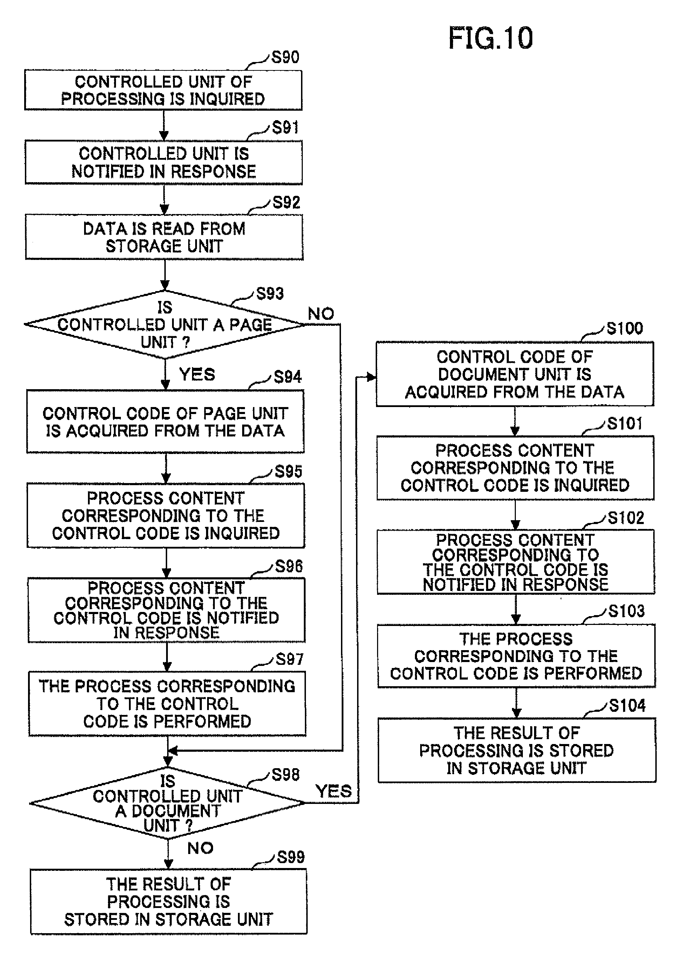

FIG. 10 is a flowchart for explaining the processing operation performed by each filter of an input filter, a processing filter, and an output filter in the image forming device of this embodiment.

Suppose that the processing operation of a copy function is performed by the multi-function peripheral of this embodiment in the examples of FIG. 9 and FIG. 10.

In the flowchart of FIG. 9, the user performs an operation to select the copy function on the operation panel 84 of the multi-function peripheral in step S80, and the connecting relation storage unit 57 corresponding to the copy function is selected in step S81.

As shown in FIG. 4, the connecting relation storage unit 57 contains the information indicating the connecting relation between two of the reading filter 31, the document processing filter 36, and the printing filter 38. In step S82, the connecting relation storage unit 57 notifies the information indicating the connecting relation of these filters to the processing operation executing unit 51 by the above-mentioned algorithm.

In step S83, the processing operation executing unit 51 acquires all the information indicating the connecting relations of the reading filter 31, the document processing filter 36, and the printing filter 38 associated with the copy function, in response to the notice.

Subsequently, in step S84, the processing operation executing unit 51 requests start of the processing operation to each of the reading filter 31, the document processing filter 36, and the printing filter 38 associated with the copy function.

In the following, each processing operation of the reading filter 31, the document processing filter 36, and the printing filter 38 will be described.

First, the processing operation of the reading filter 31 which is one of the input filters will be described.

As shown in FIG. 10, in step S90, the reading filter 31 causes the controlled unit request unit 521 to inquire a controlled unit of processing of the filter to the processing operation executing unit 51.

In step S91, the processing operation executing unit 51 notifies the controlled unit of the reading filter 31 by using the controlled unit reporting unit 511. For example, it is reported that the controlled unit of processing of the reading filter 31 is both page unit and document unit.

Subsequently, in step S92, the reading filter 31 reads the image data from the storage unit 56. This image data was read from the document by the imaging unit 86 according to the user's operation and was stored in the storage unit 56.

In step S93, it is detected whether the controlled unit of processing is a page unit. Because the controlled unit of the processing of the reading filter 31 in this case is page unit in step S93, the reading filter 31 acquires a control code of page unit from the read image data in step S94.

Subsequently, in step S95, the reading filter 31 causes the process content request unit 522 to send a request of the content of the processing corresponding to the control code, to the processing operation executing unit 51. In step S96, the processing operation executing unit 51 notifies the content of the processing to be performed by the reading filter 31 (corresponding to the control code) by using the process content reporting unit 512.

Then, in step S97, the reading filter 31 performs the process corresponding to the process content being notified.

As shown in FIG. 6, when the control code is any of "none", 4, 5 and 6, there is no process to be performed in step S97 by the reading filter 31 on a page basis, and when the control code is any of 1, 2, and 3, the reading filter 31 performs the process to record an image log in step S97 as a job of page unit.

Next, in step S98, it is detected whether the controlled unit of processing is a document unit. Because the reading filter 31 has the process to be performed on a document basis in step S98, the reading filter 31 in step S100 acquires a control code of document unit from the image data previously read from the storage unit 56.

Subsequently, in step S101, the reading filter 31 causes the process content request unit 522 to send a request of the content of the processing corresponding to the control code, to the processing operation executing unit 51. In step S102, the processing operation executing unit 51 notifies the content of the processing to be performed by the reading filter 31 (corresponding to the control code) by using the process content reporting unit 512.

Then, in step S103, the reading filter 31 performs the process according to the process content being notified. As shown in FIG. 6, the reading filter 31 performs the process to record a job log in step S103 as a job of document unit for all values of the control code.

Finally, in step S104, the reading filter 31 stores the control code and the image data read by the imaging unit 86 into the storage unit 56.

Next, the processing operation performed by the document processing filter 36 which is one of the processing filters will be described.

As shown in FIG. 10, in step S90, the document processing filter 36 causes the controlled unit request unit 531 to inquire a controlled unit of processing of the filter to the processing operation executing unit 51.

In step S91, the processing operation executing unit 51 notifies the controlled unit of the document processing filter 36 by using the controlled unit reporting unit 511. For example, it is reported that the controlled unit of processing of document processing filter 36 is page unit only.

Subsequently, in step S92, the document processing filter 36 reads the image data from the storage unit 56 where the image data was previously stored by the reading filter.

Because the controlled unit of the processing of the document processing filter 36 is page unit in step S93, the document processing filter 36 acquires a control code of page unit from the image data in the storage unit 56 in step S94.

Subsequently, in step S95, the document processing filter 36 causes the process content request unit 532 to send a request of the content of the processing corresponding to the control code, to the processing operation executing unit 51. In step S96, the processing operation executing unit 51 notifies the content of the processing to be performed by the document processing filter 36 (corresponding to the control code) by using the process content reporting unit 512.

Then, in step S97, the document processing filter 36 performs the process corresponding to the process content being notified. As shown in FIG. 6, when the control code is any of "none", 4, 5 and 6, the document processing filter 36 performs the process of normal operation in step S97 as a job of page unit, and when the control code is any of 1, 2, and 3, there is no process to be performed in step S97 by the document processing filter 36 on a page basis. The normal operation performed by the document processing filter 36 is, for example, an image processing, such as image data expansion, image data reduction, etc.

Because there is no process of document unit to be performed by the document processing filter 36 in step S98, the document processing filter stores the control code and the processing result after the process of page unit is performed by the document processing filter into the storage unit 56 in step S99.

Next, the processing operation performed by the printing filter 38 which is one of the output filters will be described.

As shown in FIG. 10, in step S90, the printing filter 38 causes the controlled unit request unit 531 to inquire a controlled unit of processing of the filter to the processing operation executing unit 51.

In step S91, the processing operation executing unit 51 notifies the controlled unit of the printing filter 38 by using the controlled unit reporting unit 511. For example, it is reported that the controlled unit of processing of the printing filter 38 is page unit only.

Subsequently, in step S92, the printing filter 38 reads the image data from the storage unit 56 where the image data was previously stored by the document processing filter.

Because the controlled unit of the processing of the printing filter 38 is page unit in step S93, the printing filter 38 acquires a control code of page unit from the image data previously read from the storage unit 56 in step S94.

Subsequently, in step S95, the printing filter 38 causes the process content request unit 542 to send a request of the content of processing corresponding to the control code, to the processing operation executing unit 51. In step S96, the processing operation executing unit 51 notifies the content of the processing to be performed by the printing filter 38 (corresponding to the control code) by using the process content reporting unit 512.

Then, in step S97, the printing filter 38 performs the process corresponding to the process content being notified. As shown in FIG. 6, when the control code is any of "none", 4, 5 and 6, the printing filter 38 performs the normal operation as a job of page unit and performs a predetermined printing job. When the control code is any of 1, 2, and 3, the printing filter 38 performs the process to cancel the print job and the process to output a beep sound as a job of page unit.

Subsequently, it is detected in step S98 that there is no process to be performed by the printing filter 38 on a document basis. In step S99, the printing filter 38 stores the control code in the storage unit 56 together with the result of the processing of the printing filter 38 after the process of page unit is performed.

Because the series of copy processes in the multi-function peripheral are finished with the printing filter 38, the processing operation of the multi-function peripheral corresponding to the copy operation requested by the user is terminated.

The present invention is not limited to the specifically disclosed embodiments, and variations and modifications may be made without departing from the scope of the present invention.

The present application is based on Japanese patent application No. 2007-286730, filed on November 2, 2007, and Japanese patent application No. 2008-273455, filed on October 23, 2008, the content of which are incorporated herein by reference in their entirety.

## Claims

1. An image forming device including a plurality of input units, a plurality of processing units, and a plurality of output units, which are arranged to perform image-data processing,
wherein, with respect to a single application in the image forming device, a predetermined input unit, a predetermined processing unit, and a predetermined output unit are selected from among the plurality of input units, the plurality of processing units, and the plurality of output units, respectively, and the predetermined input unit, the predetermined processing unit, and the predetermined output unit are connected to execute the application,
the image forming device comprising:
a processing operation executing unit configured to instruct a processing operation of each of the predetermined input unit, the predetermined processing unit, and the predetermined output unit;
and
a controlled unit reporting unit configured in the processing operation executing unit to notify a controlled unit of processing to be performed, to each of the predetermined input unit, the predetermined processing unit, and the predetermined output unit.

2. The image forming device according to claim 1, wherein each of the predetermined input unit, the predetermined processing unit, and the predetermined output unit comprises a controlled unit request unit configured to request the processing operation executing unit to send a controlled unit of processing to be performed, and
wherein the controlled unit reporting unit of the processing operation executing unit notifies the controlled unit of processing in response to a request from each of the predetermined input unit, the predetermined processing unit, and the predetermined output unit.

3. The image forming device according to claim 1, wherein the processing operation executing unit comprises a process content reporting unit configured to notify the content of processing to be performed, to each of the predetermined input unit, the predetermined processing unit, and the predetermined output unit.

4. The image forming device according to claim 3, wherein each of the predetermined input unit, the predetermined processing unit, and the predetermined output unit comprises a process content request unit configured to request the processing operation executing unit to send the content of processing to be performed, and
wherein the process content reporting unit of the processing operation executing unit notifies the content of processing in response to a request from each of the predetermined input unit, the predetermined processing unit, and the predetermined output unit.

5. The image forming device according to claim 4, wherein each of the predetermined input unit, the predetermined processing unit, and the predetermined output unit is configured to store in a storage unit both a processing result and a control code, the control code specifying a processing operation of a corresponding one of the predetermined input unit, the predetermined processing unit, and the predetermined output unit using the processing result, and
wherein the process content request unit requests the processing operation executing unit to send the content of processing to be performed in accordance with the control code.

6. The image forming device according to claim 1, further comprising a connecting relation storage unit configured to store a table which defines a combination of the predetermined input unit, the predetermined processing unit, and the predetermined output unit which are connected with respect to the application in the image forming device,
wherein the connecting relation storage unit comprises a connecting relation reporting unit configured to notify to the processing operation executing unit information indicating a connecting relation between two of the predetermined input unit, the predetermined processing unit, and the predetermined output unit, and
wherein the processing operation executing unit acquires information indicating a connection between the predetermined input unit, the predetermined processing unit, and the predetermined output unit, based on the information indicating the connecting relation received from the connecting relation reporting unit.

7. An image formation controlling method for use in an image forming device including a plurality of input units, a plurality of processing units, and a plurality of output units, which are arranged to perform image-data processing, wherein, with respect to a single application in the image forming device, a predetermined input unit, a predetermined processing unit, and a predetermined output unit are selected from among the plurality of input units, the plurality of processing units, and the plurality of output units, respectively, and the predetermined input unit, the predetermined processing unit, and the predetermined output unit are connected to execute the application, the image formation controlling method comprising:
a processing operation executing step of instructing a processing operation of each of the predetermined input unit, the predetermined processing unit, and the predetermined output unit; and
a controlled unit reporting step of notifying a controlled unit of processing to be performed, to each of the predetermined input unit, the predetermined processing unit, and the predetermined output unit.

8. The image formation controlling method according to claim 7, further comprising:
a step of receiving, from each of the predetermined input unit, the predetermined processing unit, and the predetermined output unit, a request for a controlled unit of processing to be performed,
wherein the controlled unit reporting step is configured to notify the controlled unit of processing in response to a request from each of the predetermined input unit, the predetermined processing unit, and the predetermined output unit.

9. The image formation controlling method according to claim 7, wherein the processing operation executing step comprises a process content reporting step of notifying the content of processing to be performed, to each of the predetermined input unit, the predetermined processing unit, and the predetermined output unit.

10. The image formation controlling method according to claim 9, further comprising a step of receiving, from each of the predetermined input unit, the predetermined processing unit, and the predetermined output unit, a request for the content of processing to be performed,
wherein the process content reporting step is configured to notify the content of processing in response to a request from each of the predetermined input unit, the predetermined processing unit, and the predetermined output unit.

11. The image formation controlling method according to claim 10, further comprising a step of storing in a storage unit both a processing result of each of the predetermined input unit, the predetermined processing unit, and the predetermined output unit, and a control code, the control code specifying a processing operation of a corresponding one of the predetermined input unit, the predetermined processing unit, and the predetermined output unit using the processing result,
wherein the request receiving step is configured to receive the request for the content of processing to be performed in accordance with the control code.

12. The image formation controlling method according to claim 7, further comprising a connecting relation storage step of storing a table which defines a combination of the predetermined input unit, the predetermined processing unit, and the predetermined output unit which are connected with respect to the application in the image forming device,
wherein the connecting relation storage step comprises a connecting relation reporting step of notifying information indicating a connecting relation between two of the predetermined input unit, the predetermined processing unit, and the predetermined output unit, and
wherein the processing operation executing step is configured to acquire information indicating a connection between the predetermined input unit, the predetermined processing unit, and the predetermined output unit, based on the received information indicating the connecting relation.

13. A computer-readable recording medium storing an image formation controlling program which, when executed by a computer, causes the computer to perform an image formation controlling method for use in an image forming device including a plurality of input units, a plurality of processing units, and a plurality of output units, which are arranged to perform image-data processing, wherein, with respect to a single application in the image forming device, a predetermined input unit, a predetermined processing unit, and a predetermined output unit are selected from among the plurality of input units, the plurality of processing units, and the plurality of output units, respectively, and the predetermined input unit, the predetermined processing unit, and the predetermined output unit are connected to execute the application, the image formation controlling method comprising:
a processing operation executing step of instructing a processing operation of each of the predetermined input unit, the predetermined processing unit, and the predetermined output unit; and
a controlled unit reporting step of notifying a controlled unit of processing to be performed, to each of the predetermined input unit, the predetermined processing unit, and the predetermined output unit.
